# EUROPÄISCHE PATENTSCHRIFT

(11) **EP 0 978 083 B1**
(45) Veröffentlichungstag und Bekanntmachung des Hinweises auf die Patenterteilung: **10.09.2003**
(21) Anmeldenummer: 97930308.8
(22) Anmeldetag: 12.06.1997
(51) Int. Cl.: G06K 7/00

(54) **KARTENLESER FÜR CHIPKARTEN**
CHIP CARD READER
LECTEUR DE CARTES A PUCE

(30) Priorität: 17.06.1996 DE 19624079
(43) Veröffentlichungstag der Anmeldung: 09.02.2000
(73) Patentinhaber: ROBERT BOSCH GMBH, 70442 Stuttgart (DE)
(72) Erfinder: JELINEK, Egbert, D-31157 Sarstedt (DE); GOSS, Stefan, D-31137 Hildesheim (DE)
(86) Internationale Anmeldenummer: DE9701184
(87) Internationale Veröffentlichungsnummer: WO97049058

(56) Entgegenhaltungen:
- EP-A- 0 139 593
- EP-A- 0 696 010
- EP-A- 0 715 271
- FR-A- 2 661 762
- US-A- 5 490 792

## Beschreibung

Die Erfindung betrifft einen Kartenleser für Chipkarten nach dem Oberbegriff des Anspruchs 1.

Für die elektronische Verwaltung von Dienstleistungssystemen, z. B. Sicherheitssystemen, stationären und mobilen Telefondiensten, Bank- und Gesundheitswesen, finden seit geraumer Zeit Plastikkarten Verwendung, auf denen ein Mikrochip mit den veränderlichen und unveränderlichen Daten angeordnet ist (sog. Chipkarten). Mittels der gespeicherten Daten wird bei jedem Zugangsversuch die Zugangsberechtigung und/oder die Zulässigkeit der angestrebten Handlung elektronisch geprüft. Dazu wird die Chipkarte in einem Kartenleser so positioniert, daß die auf der Oberfläche der Chipkarte angeordneten Kontakte des Mikrochips mit entsprechenden Kontakten im Kartenleser elektrisch leitend verbunden sind und so der Austausch von Daten ermöglicht wird.

Aus den deutschen Patentanmeldungen DE-A-19 501 620 und DE-A-19 501 641 sind bereits Kartenleser für Chipkarten bekannt, bei denen aber stets nur eine Chipkarte einführbar ist. Außerdem ist aus EP-A-0 696 010 ein Chipkartenleser mit den Merkmalen der Präambel des unabhängigen Anspruchs 1 bekannt.

### Vorteile der Erfindung

Der erfindungsgemäße Kartenleser für Chipkarten mit den Merkmalen des Hauptanspruchs hat demgegenüber den Vorteil, daß bei Einführung nur einer Chipkarte in den Kartenleser ermittelt werden kann, mit welcher Kontaktanordnung die Chipkarte in Verbindung steht.

Durch die in den abhängigen Ansprüchen aufgeführten Maßnahmen sind vorteilhafte Weiterbildungen und Verbesserungen des im Hauptanspruch angegebenen Kartenlesers möglich. Eine besonders platzsparende Ausführung des Kartenlesers ergibt sich dadurch, daß beim Einschieben von zwei Chipkarten die beiden Chipkarten mit ihren Rückseiten plan aufeinander liegen. Dadurch können auf minimalem Raum die auf den Vorderseiten der Chipkarten angebrachten Kontakte zum Auslesen und/oder Aufbringen von Karteninformation mit zwei Kontaktanordnungen kontaktiert werden.
Mit einer zweiten auf die An- oder Abwesenheit einer zweiten Chipkarte ansprechenden Schaltanordnung eröffnet sich die Möglichkeit, zwei Chipkarten zeitlich versetzt nacheinander in den Kartenschacht einzuführen.

Das Vorsehen einer Anpreßplatte stellt dabei eine einfache Möglichkeit dar, die zuerst eingeführte Chipkarte zur ersten Schaltanordnung zu führen. Dadurch wird in einfacher Weise gewährleistet, daß eine zweite Chipkarte, die zeitlich nach der ersten eingeführt wird, lediglich die zweite Schaltanordnung betätigt und somit deren Anwesenheit im Kartenschacht eindeutig nachweisbar ist. Eine kostengünstige Ausführung dieser Anpreßplatte weist dabei lediglich zusätzlich eine Anpreßfeder und eine drehbare Lagerung dieser Anpreßplatte auf.

In einer Grundausführung weist die Anpreßplatte Aussparungen auf, die Platz lassen für die starr befestigte zweite Kontaktanordnung. Eine weitere vorteilhafte Verbesserung stellt die Befestigung der zweiten Kontaktanordnung direkt auf der Anpreßplatte dar. Dadurch ist es egal, ob beim Einschieben lediglich einer Chipkarte deren Vorderseite oben oder unten liegt.

Durch eine Verbindung der Kontakt- bzw. Schaltanordnungen mit einem Rechner wird es möglich, eingebrachte Chipkarten zu lesen, auf ihre Funktion hin zu überprüfen bzw. auch zu beschreiben. Die Schaltanordnungen melden die Anwesenheit an den Rechner und können beispielsweise die Inbetriebnahme einer Anwendung in Gang setzen.

Der Vorteil des geringen Platzbedarfs eines Kartenlesers für zwei Chipkarten kommt insbesondere bei der Integration in einem Autoradio zur Geltung. Autotelefonfunktion sowie Lesen von Information für den Abruf eines Traffic Message Channels können elegant kombiniert werden.

In einer weiterführenden Anwendung ist auch die Übertragung von Information von der ersten Kontaktanordnung zur zweiten oder umgekehrt denkbar, beispielsweise die Übertragung von elektronischem Geld oder ähnlichem, bei minimalem Platzbedarf.

Ein vorgesehener Auswurfmechanismus vereinfacht die Entnahme einer eingebrachten Chipkarte. Insbesondere bei einem vorhandenen zweiten Auswurfmechanismus können wahlweise zwei eingeführte Chipkarten zugleich entnommen werden, oder nur eine einzelne Chipkarte entnommen werden.

### Zeichnung

Ausführungsbeispiele der Erfindung sind in der Zeichnung dargestellt und in der nachfolgenden Beschreibung näher erläutert. Es zeigen Figur 1 eine nach internationalen Normen aufgebaute Chipkarte, Figur 2 ein erstes Ausführungsbeispiel der Erfindung, Figur 3 ein weiteres Ausführungsbeispiel, Figur 4 ein drittes Ausführungsbeispiel, Figur 5 ein viertes Ausführungsbeispiel, Figur 6 eine Teildarstellung eines fünften Ausführungsbeispiels, Figur 7 das fünfte Ausführungsbeispiel, Figur 8 eine sechstes Ausführungsbeispiel, Figur 9 ein siebtes Ausführungsbeispiel, Figur 10 Details des siebten Ausführungsbeispiels, Figur 11 ein achtes Ausführungsbeispiel und Figur 12 ein neuntes Ausführungsbeispiel.

### Beschreibung der Ausführungsbeispiele

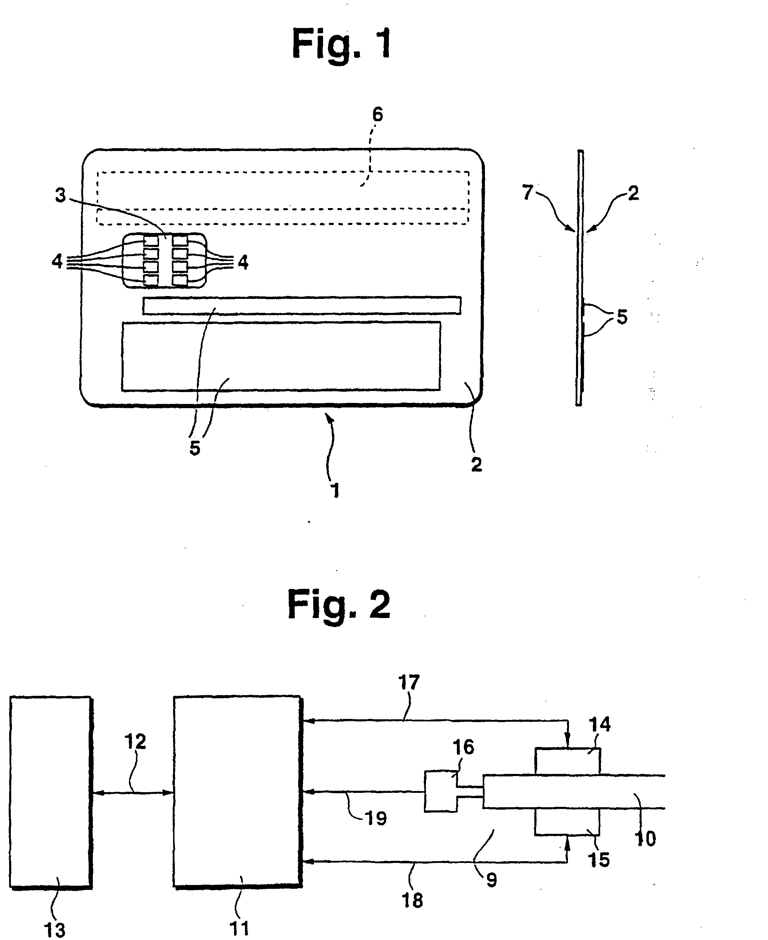

Figur 1 zeigt eine Chipkarte 1 mit einer Vorderseite 2 und einer Rückseite 7. Auf der Vorderseite 2 sind Schriftfelder 5 mit aufwölbender Prägung aufgebracht. Auf der Vorderseite befindet sich ebenfalls ein Mikrochip 3, der über Kontakte 4 elektrisch auf der Vorderseite kontaktiert werden kann. Auf der Rückseite 7 können sich Magnetstreifen befinden, die Rückseite 7 ist plan. Somit können zwei Chipkarten 1 plan auf ihren Rückseiten 7 aufeinandergelegt werden. Die Darstellung lehnt sich an Isonormen an, generell jedoch sind für den erfindungsgemäßen Kartenleser alle Chipkarten verwendbar, die auf der Vorderseite elektrisch kontaktiert werden und deren Rückseite eine plane Oberfläche hat.

Figur 2 zeigt die schematische Darstellung eines Ausführungsbeispiels des erfindungsgemäßen Kartenlesers 9. Am Kartenschacht 10 sind eine erste Kontaktanordnung 14 und eine zweite Kontaktanordnung 15 angebracht. Über diese Kontaktanordnungen ist der Kartenleser in der Lage, mit zwei in Figur 1 beschriebenen Chipkarten, die im Kartenschacht eingeführt worden sind, unabhängig zu interagieren. Eine erste Schaltanordnung 16 registriert die An- oder Abwesenheit von Chipkarten. Die Kontaktanordnungen 14 und 15 sowie die erste Schaltanordnung 16 sind über eine erste Datenverbindung 17, eine zweite Datenverbindung 18 bzw. eine erste Schaltleitung 19 mit einem Rechner 11 verbunden. Der Rechner 11 steht über Steuer- und Empfangsleitungen 12 mit einem Anwendungsteil 13 in Verbindung, beispielsweise mit einer Autotelefoneinheit oder mit einem Traffic Message Channel Decoder. Der Rechner 11 registriert nach Betätigung der Schaltanordnung 16, ob die Vorderseite der Chipkarte nach oben oder nach unten weist. Dementsprechend aktiviert er über die erste Datenverbindung 17 oder die zweite Datenverbindung 18 einen Datenaustausch mit der eingeführten Chipkarte. Über die Steuer- und Empfangsleitungen 12 werden Anwendungen aktiviert oder desaktiviert bzw. Steueranweisungen an das Anwendungsteil ausgegeben, die sich nach den Instruktionen, die auf der Chipkarte gespeichert sind, ergeben. Die Chipkarte kann auch umgekehrt beschrieben werden. Aus einer Anwendung 13 erbgeben sich beispielsweise zu speichernde Informationen, die dann über die entsprechende Kontaktanordnung auf der Chipkarte abgespeichert werden.

Das Anwendungsteil 13 kann auch aus zwei Anwendungen bestehen, die mit zwei zur gleichen Zeit im Kartenschacht 10 eingeführten Chipkarten aktivierbar und steuerbar sind.

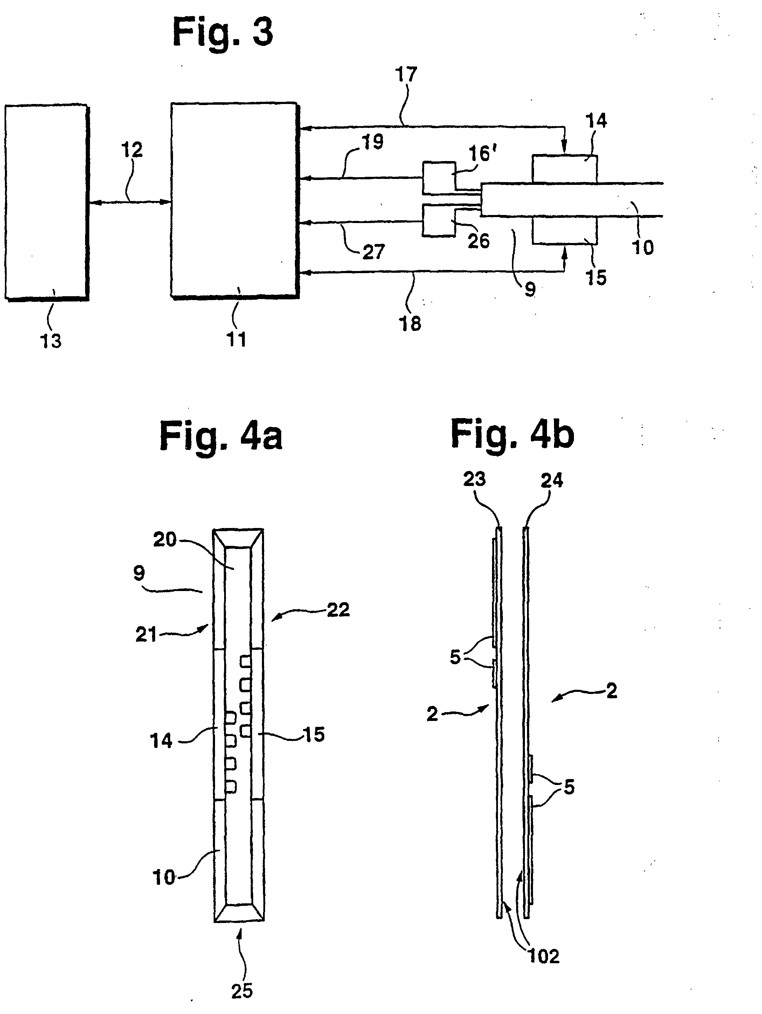

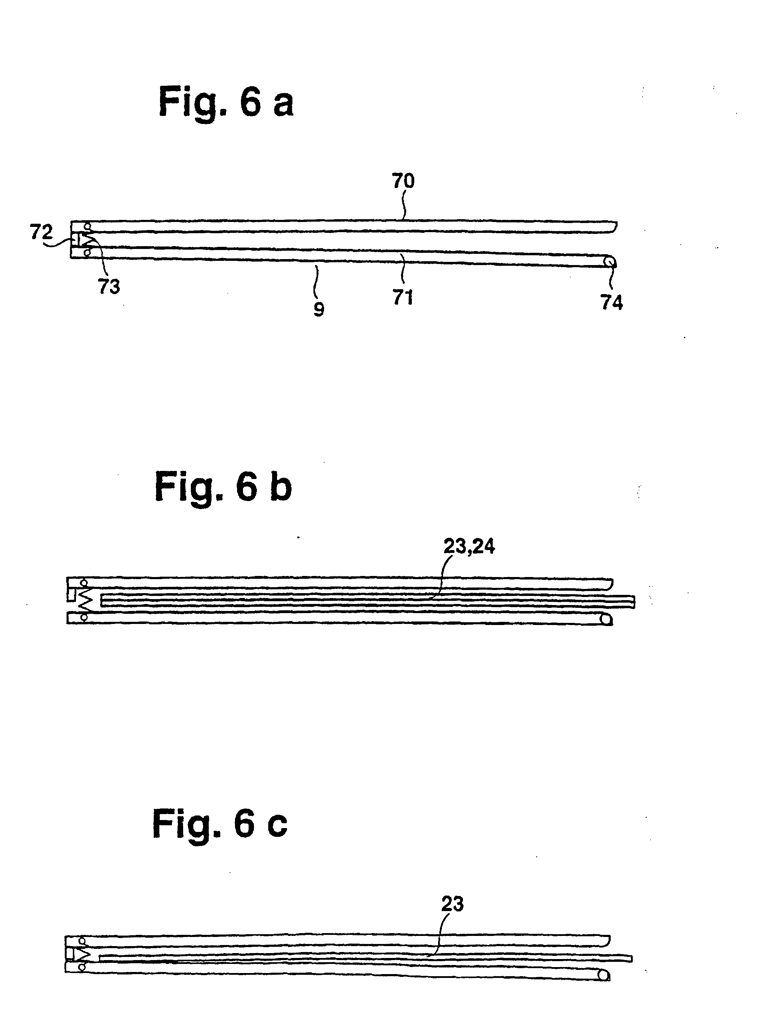

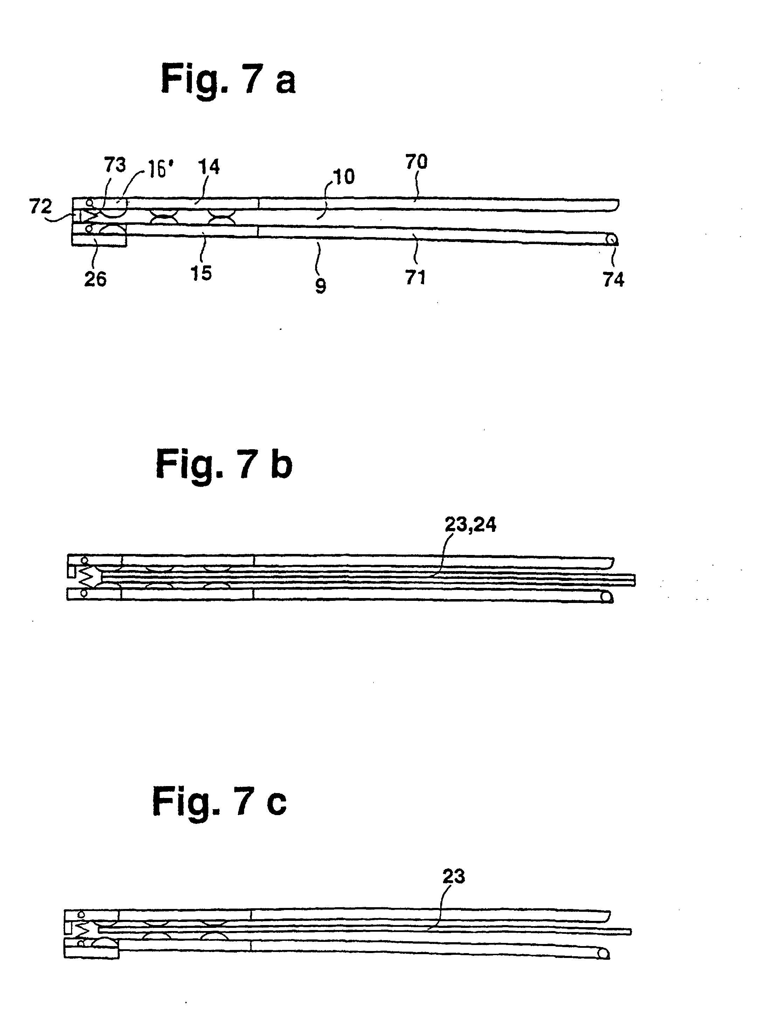

Figur 3 zeigt das Schema eines weiteren Ausführungsbeispiels. Der Unterschied zu Figur 2 besteht darin, daß am Kartenschacht 10 neben einer ersten Schaltanordnung 16' eine zweite Schaltanordnung 26 angebracht ist, die über eine zweite Schaltleitung 27 mit dem Rechner 11 verbunden ist. Bei diesem Aufbau ist zusätzlich ein Mittel vorgesehen, durch das mit dem Einführen der ersten Karte die erste Schaltanordnung, nicht aber die zweite Schaltanordnung betätigbar wird. So können zwei Chipkarten, die einzeln nacheinander in den Kartenschacht 10 eingeführt werden, vom Rechner 11 registriert, die entsprechenden Datenverbindungen 17 bzw. 18 aktiviert und die Kommunikation über die Steuer- und Empfangsleitung 12 mit dem Anwendungsteil 13 in Gang gesetzt werden. Das Mittel, mit dem die zuerst eingeführte Chipkarte zur ersten Schaltanordnung geführt wird, kann beispielsweise in Form einer Anpreßplatte ausgeführt sein, wie sie im folgenden in den Figuren 6 und 7 näher beschrieben wird.

Figur 4a zeigt ein Detail des in Figur 2 und 3 schematisch dargestellten Kartenlesers 9. Der Kartenschacht 10 weist eine erste Seite 21, eine zweite Seite 22 und eine schmale Seite 25 auf. An der ersten Seite 21 ist die erste Kontaktanordnung 14 angebracht, an der zweiten Seite 22 die zweite Kontaktanordnung 15. Figur 4a zeigt einen Blick durch die Öffnung des Kartenschachts auf die Rückwand 20. In Figur 4b sind eine erste und zweite Chipkarte 23 bzw. 24 im Seitenprofil in der Lage dargestellt, in der sie in den Kartenschacht nach Figur a einführbar sind, wenn man sie mit ihren Rückseiten 102 plan aufeinander legt. Die auf den Vorderseiten 2 angebrachten Mikrochips mit ihren Kontakten 4 (nicht eingezeichnet) weisen dabei zu den jeweiligen Kontaktanordnungen 14 bzw. 15. Im Kartenschacht 10 besteht genügend Platz für die Schriftfelder 5, die eine aufwölbende Prägung aufweisen.

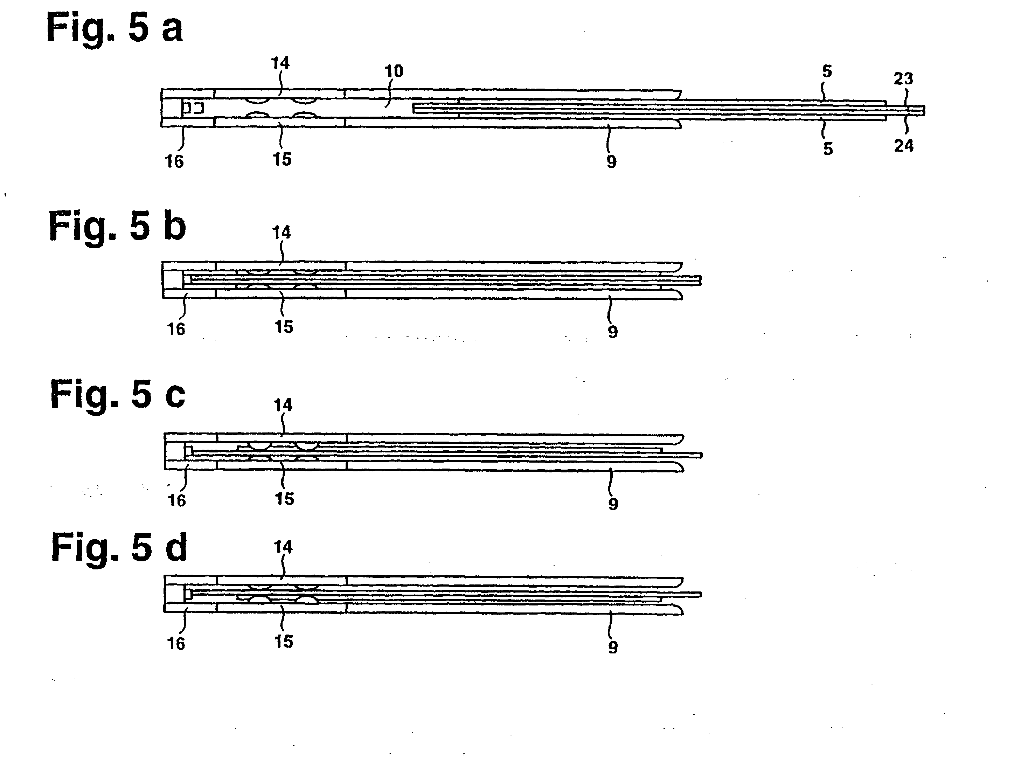

Figur 5 zeigt den Kartenleser 9 nach Figur 2 in verschiedenen Betriebszuständen. Figur 5a zeigt den Kartenleser 9 mit den zwei Chipkarten 23, 24 während des Einführens. Die Kontaktanordnungen 14 und 15 stehen noch frei, die Schaltanordnung 16 ist noch nicht betätigt. Figur 5b zeigt den Kartenleser mit eingeschobenen Chipkarten. Die Schaltanordnung 16 ist betätigt, der Rechner hat die Anwesenheit von Chipkarten registriert, und es erfolgt zwischen Rechner 11 und Chipkarten 23 bzw. 24 ein Datenaustausch über die Kontaktanordnungen 14 bzw. 15. Figur 5c zeigt den Kartenleser 9 mit einer eingeschobenen Chipkarte, die über die Kontaktanordnung 14 kontaktiert ist, Figur d entsprechend den Kartenleser mit einer eingeschobenen Chipkarte, die über die Kontaktanordnung 15 kontaktiert ist. In jedem Falle prüft der Rechner 11 nach Betätigung der Schaltanordnung 16, welche Kontaktanordnung mit den Kontakten einer Chipkarte in Verbindung steht. Der Rechner veranlaßt dann, daß über die entsprechenden Kontaktanordungen der oben beschriebene Datenaustausch erfolgt.

Wird im Falle der Figur 5c oder 5d eine zweite Chipkarte nachträglich eingeschoben, so wird dies, da nur eine erste Schaltanordnung 16 vorhanden ist, die Anwesenheit dieser zweiten Chipkarte vom Rechner 11 nicht registriert, d. h. in diesem Fall muß die erste Karte gezogen und anschließend beide Chipkarten zugleich eingelegt werden. Erst dann kann der Rechner erkennen, daß über beide Kontaktanordnungen 14 und 15 ein Datenaustausch möglich ist.

Figur 7 zeigt ein Ausführungsbeispiel des Kartenlesers 9 wie er schematisch in Figur 3 dargestellt ist. Durch das Vorhandensein der ersten Schaltanordnung 16' und der zweiten Schaltanordnung 26 wird auch bei eingelegter erster Chipkarte 23 erkannt, daß nachträglich noch die zweite Chipkarte 24 eingeschoben wird. Dadurch ist es nicht mehr erforderlich, bei gewünschtem Einlegen einer zweiten Chipkarte zunächst die erste Chipkarte wieder aus dem Kartenschacht 10 zu entfernen. Ferner erkennt der Rechner 11, ob die Chipkarten 23 und 24 richtig eingelegt sind. Sind sie richtig eingelegt, kann er mit den Chipkarten über die Kontaktanordnungen 14 bzw. 15 mit den Mikrochips 3 der Chipkarten interagieren. Der Kartenschacht weist eine Halteplatte 70 sowie eine Anpreßplatte 71 auf. Die Anpreßplatte 71 ist drehbar in einer Lagerung 74 gelagert. Ist der Kartenschacht 10 leer, so preßt eine Zugfeder 73 die Anpreßplatte 71 an einen Abstandshalter 72. Im in Figur 7 beschriebenen Ausführungsbeispiel ist die zweite Kontaktanordnung 15 starr mit der Anpreßplatte 71 verbunden, bewegt sich also mit ihr mit, wenn eine Chipkarte in den Kartenschacht eingeführt wird. Figur 7a zeigt die Position der Anpreßplatte 71, wenn der Kartenschacht 10 leer ist. Sind zwei Chipkarten in den Kartenschacht eingelegt, so ist die Zugfeder 73 maximal gedehnt und die Anpreßplatte 71 liegt parallel zur Halteplatte 70 (Figur 7b). Wird zunächst nur eine Karte eingeschoben, so drückt die Anpreßplatte 71 die Chipkarte 23 in Richtung Halteplatte 70, wodurch, wenn die Chipkarte 23 genügend weit in den Kartenschacht 10 eingeführt ist, ausschließlich die erste Schaltanordnung 16' betätigt wird (Figur 7c). Der Rechner 11 erkennt, über welche Kontaktanordnung er mit der Chipkarte kommunizieren kann. Wird eine zweite Chipkarte 24 nachträglich in den Kartenschacht eingeführt, so wird auch die zweite Schaltanordnung 26 betätigt und der Rechner zu Interaktion auch mit der zweiten Chipkarte veranlaßt. Je nach Lage der Vorderseite der ersten eingebrachten Chipkarte muß natürlich die zweite Chipkarte entweder zwischen Halteplatte und erster eingebrachter Chipkarte oder zwischen erster eingebrachter Chipkarte und Anpreßplatte eingeführt werden. Auch hier wiederum erkennt der Rechner, ob nach Betätigung der zweiten Schaltanordnung die zweite Chipkarte in der richtigen Lage eingeführt wurde. Figur 6 verdeutlicht die Lagen der Anpreßplatte 71 in den verschiedenen Betriebszuständen des Kartenlesers. Figur 6a zeigt Kartenleser 9 ohne Chipkarte, Figur 6b den Kartenleser mit zwei eingebrachten Chipkarten 23, 24, und Figur 6c zeigt den Kartenleser mit einer eingebrachten Chipkarte 23. Dabei sind im Vergleich zu Figur 7 die Kontaktanordnungen und die Schaltanordnungen weggelassen. Die Schaltanordnungen 16' und 26 in Figur 7 bewegen sich nicht mit der Anpreßplatte mit. Sie sind starr mit dem Kartenschacht 10 verbunden. Die Anpreßplatte 71 weist dementsprechend Aussparungen (nicht eingezeichnet) auf, die Platz lassen für die Betätigung der Schaltanordnung 26 durch eingebrachte Chipkarten. Alternativ kann die Kontaktanordnung 15 starr mit dem Kartenschacht 10 verbunden sein. In diesem Falle weist die Anpreßplatte 71 dann weitere Aussparungen auf, die ebenfalls nicht eingezeichnet sind. Diese weiteren Aussparungen dienen dazu, einen elektrischen Kontakt zwischen der Kontaktanordnung 15 und einer eingebrachten Chipkarte zu gewährleisten. In diesem Falle jedoch muß die erste Chipkarte so eingebracht werden, daß ihre Vorderseite zur Halteplatte 70 hin orientiert ist, andernfalls kann sie nicht elektrisch kontaktiert werden. Alternativ sind auch andere Lagerungen der Anpreßplatte 71 als die in den Figuren 6 und 7 dargestellte Lagerung 74 denkbar. Wesentlich ist lediglich, daß die Anpreßplatte beim Einschieben einer ersten Chipkarte in den Kartenschacht das definierte Betätigen nur einer der beiden Schaltanordnungen 16' bzw. 26 gewährleistet.

Chipkarten tragen einen elektronisch lesbaren Erkennungscode. Liest der Rechner diesen Erkennungscode, so ist dieser in der Lage, den Dienst, der durch diese Karte unterstützt wird, zu ermitteln. Dieses Verfahren hat für den erfindungsgemäßen Kartenleser den Vorteil, daß es gleichgültig ist, welche Karte welche Position im Kartenleser einnimmt. Das ist auch unabhängig davon, ob der Kartenleser nur eine Schaltanordnung oder zwei Schaltanordnungen aufweist.

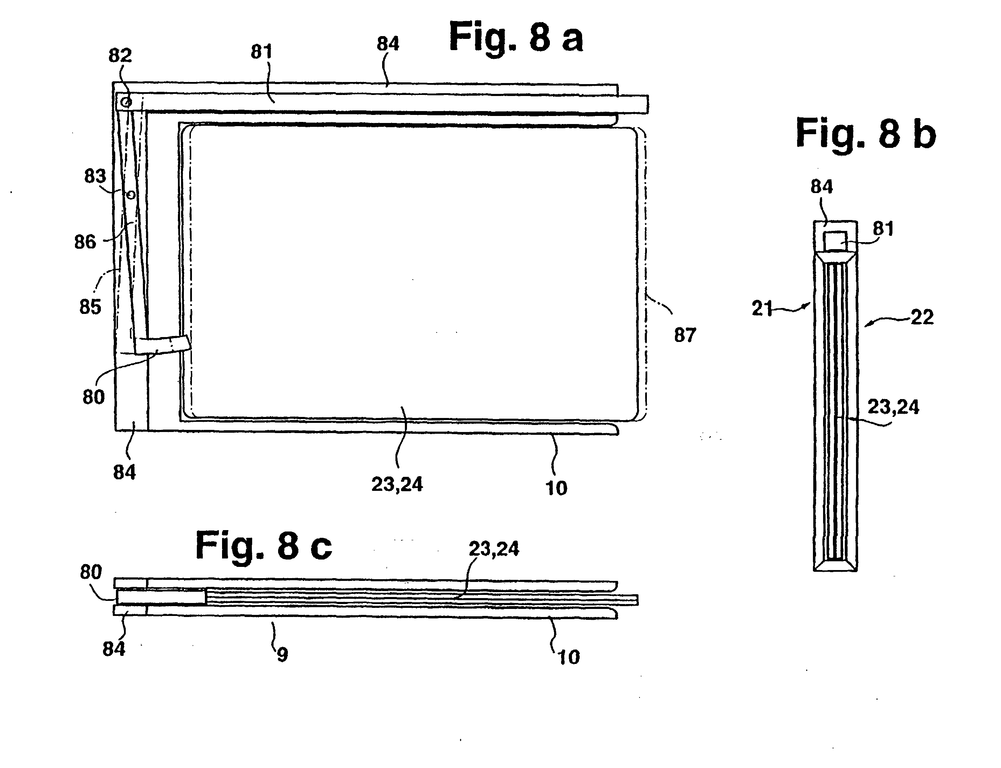

Figur 8 zeigt ein weiteres Ausführungsbeispiel eines erfindungsgemäßen Kartenlesers mit einem Kartenschacht 10 und einer daran angebauten Auswurfvorrichtung 84. Die Auswurfvorrichtung 84 weist ein erstes Auswurfgestänge 81 auf, das über eine erste Gestängelagerung 82 mit einem ersten Hebel 86 drehbar verbunden ist. Der erste Hebel 86 ist dabei über eine zweite Gestängelagerung 83 drehbar gelagert und weist einen ersten Auswurfstössel 80 auf, der durch eine Öffnung in der Wand des Kartenschachts 10 in den Kartenschacht hineinragen kann. Drückt man seitlich an der Öffnung des Kartenschachts (Figur 8b) auf das erste Auswurfgestänge 81, so werden eingebrachte Chipkarten 23 und/oder 24 ausgeworfen. Der erste Hebel 86 bewegt sich dabei heraus aus der Ruheposition 85 und schiebt eingebrachte Chipkarten in die Auswurfposition 87. Es kann dabei eine Feder vorgesehen werden, die das Auswurfgestänge und den Hebel wieder nach Auswerfen der Chipkarten in die Ruheposition zurückzieht oder -drückt, oder aber die Auswurfvorrichtung kehrt erst nach erneutem Einbringen von Chipkarten in die Ruheposition zurück. Figur 8c zeigt eine weitere Seitenansicht des Kartenlesers mit einer Auswurfvorrichtung 84.

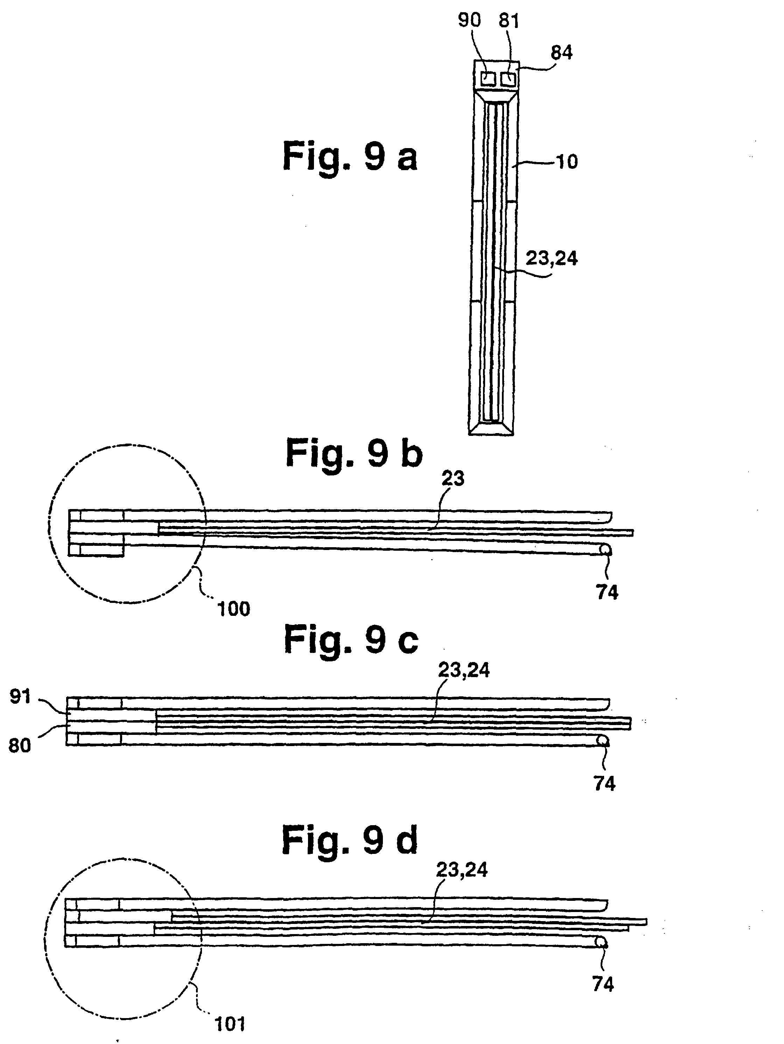

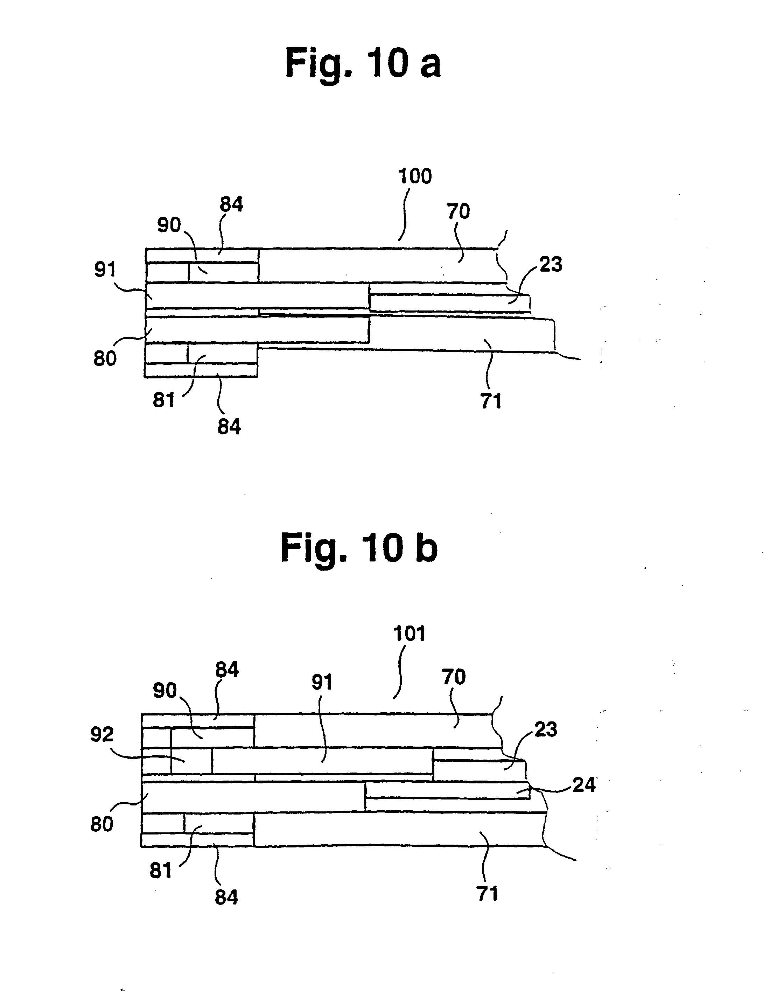

In Figur 9 und 10 ist eine weitere Verbesserung des erfindungsgemäßen Kartenlesers dargestellt. In Figur 9a ist ersichtlich, daß an dem Kartenschacht 10 eine Auswurfvorrichtung 84 mit einem ersten Auswurfgestänge 81 und einem zweiten Auswurfgestänge 90 angebracht ist. Zwei separate Auswurfgestänge ermöglichen einen getrennten Auswurf von zwei in den Kartenschacht eingebrachten Chipkarten. Figur 9b zeigt den Kartenleser mit zwei Auswurfgestängen und einer Anpreßplatte 71 in dem Zustand mit einer eingeschobenen Chipkarte, in Figur 9c mit zwei eingeschobenen Chipkarten. In Figur 9d schließlich ist der Beispiel des Auswurfs der ersten Chipkarte 23 dargestellt, bei gleichzeitig im Kartenschacht verharrender zweiter Chipkarte 24. Figur 9b bis d sind Überblicksdarstellungen. Die interessierenden Einzelheiten 100 und 101 bezüglich der Auswurfvorrichtung 84 sind in Figur 10 dargestellt. Die aus den vorangegangenen Figuren bekannten Kontaktanordnungen bzw. Schaltanordnungen sind in Figur 9b bis d der Einfachheit halber nicht dargestellt.

Figur 10a zeigt die Einzelheit 100 aus Figur 9b. Eine Chipkarte 23 ist im Kartenschacht eingelegt. Sowohl erster als auch zweiter Auswurfstössel 80 bzw. 91 befinden sich in Ruheposition. Die Anpreßplatte 71 steht schräg, da nur eine Chipkarte eingelegt ist. Zur Auswurfvorrichtung 84 gehören neben den Auswurfstösseln analog zum ersten Auswurfgestänge 81 ein zweites Auswurfgestänge 90. In Figur 10b ist die Einzelheit 101 aus Figur 9d abgebildet. Man erkennt, daß sich zwei Chipkarten 23 und 24 im Kartenschacht befinden, wobei die erste Chipkarte 23 sich in der Auswurfposition befindet. In dieser Seitenansicht wird dabei im Vergleich zur Figur 10a, wo sich der zweite Auswurfstössel 91 in Ruheposition befindet, der zweite Hebel 92 sichtbar. Die genauen Lagen der einzelnen Bestandteile der Auswurfvorrichtung 84 hängen natürlich u. a. von der Position der Qestängelagerungen 82 und 83 (vgl. Figur 8) ab, sodaß Figur 10 lediglich qualitativ die Wirkungsweise der Auswurfvorrichtung veranschaulicht. Ist zusätzlich ein Mittel vorgesehen, die Auswurfvorrichtung nach Auswerfen einer Chipkarte in die Ruheposition automatisch zurückzuführen, so ist zu beachten, daß in diesem Falle die letzte sich im Kartenschacht befindliche Chipkarte nur mit dem zweiten Auswurfstössel 91 ausgeworfen werden kann, da die Anpreßplatte 71 die letzte Chipkarte an die Halteplatte 70 drückt. Ein weiterer Vorteil einer starr auf der Anpreßplatte 71 befestigten Kontaktanordnung ergibt sich dadurch, daß durch den Auswerfvorgang der Chipkarte 23 der Kontakt zur Chipkarte 24 nicht unterbrochen wird, obwohl die Anpreßplatte 71 die im Kartenschacht verbliebene Chipkarte 24 an die Halteplatte 70 drückt. Um beim Einschieben von Chipkarten bzw. beim Auswerfen einzelner Chipkarten oder auch beider Chipkarten zugleich keine elektrischen Fehlfunktionen zu verursachen, können natürlich mit dem Rechner 11 entsprechende Maßnahmen getroffen werden. Z. B. kann durch das Betätigen der Schaltanordnung 26 und/oder 16' bzw. 16 kurzfristig die Kontaktanordnung 14 und/oder die Kontaktanordnung 15 abgeschaltet werden. Bei zwei Schaltanordnungen erkennt außerdem der Rechner, ob er mit der Kontaktanordnung 14 oder mit der zweiten Kontaktanordnung 15 kommuniziert. Die nichtaktive Kontaktanordnung kann dann abgeschaltet werden, sodaß beim Einführen einer zweiten Chipkarte diese über die desaktivierte Kontaktanordnung gleitet.

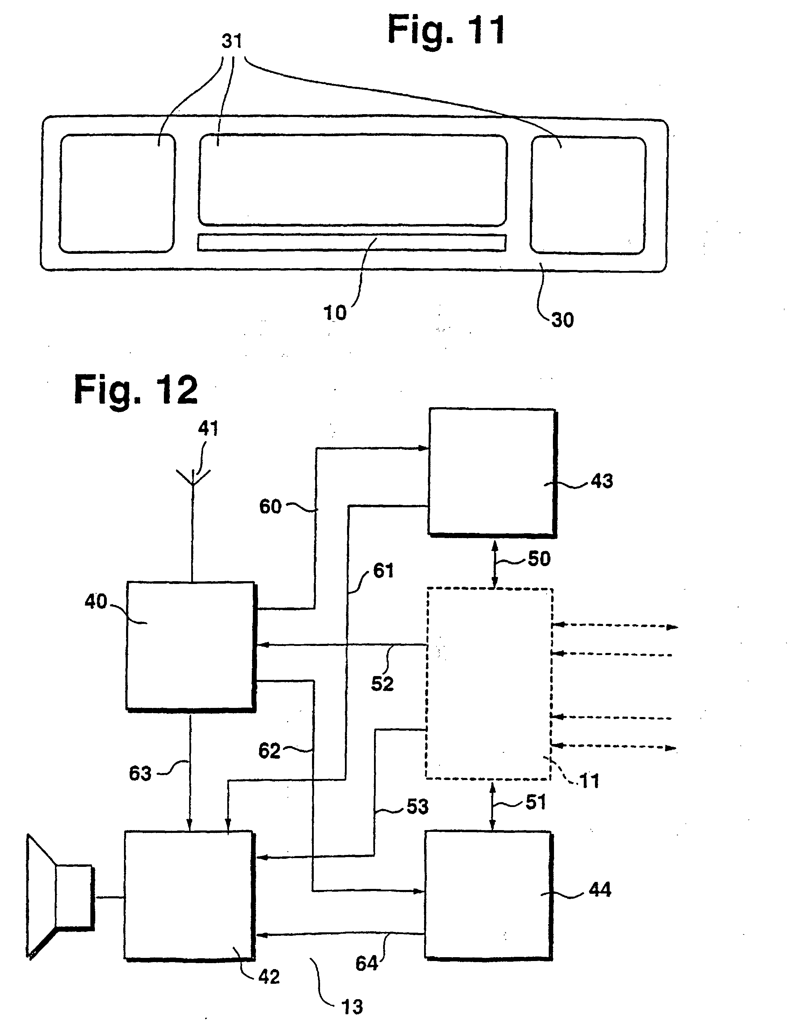

Figur 11 zeigt als Ausführungsbeispiel die Integration des Kartenlesers mit dem Kartenschacht 10 in ein Autoradio 30. Schematisch dargestellt sind ferner Bedienungs- und Anzeigeinstrumente 31 des Autoradios 30. Dieses Autoradio verfügt beispielsweise sowohl über einen Rundfunkempfänger, als auch über die technischen Einrichtungen eines Traffic Message Channels Dekoders und eines Autotelefons.

Figur 12 zeigt als Anwendungsteil 13 ein Ausführungsbeispiel mit einer Empfangseinheit 40 (z. B. einem Autoradioempfänger), einer Antenne 41, einem Audioverstärker 42, einem TMC-Dekoder 43 und einer Autotelefoneinheit 44. Die genannten Einheiten kommunizieren mit dem Rechner 11, der zusammen mit den zuvor beschriebenen Datenverbindungen und Schaltleitungen gestrichelt dargestellt ist. Die Kommunikation der genannten Teile des Anwendungsteils 13 mit dem Rechner 11 erfolgt über uni- bzw. bidirektionale Verbindungen 50, 51, 52, 53 60, 61, 62, 63 und 64. Über die Antenne 41 und die in ihrer Empfangsfrequenz steuerbaren Empfangseinheit 40 werden die empfangenen Rundfunk-, TMCund Autotelefonsignale an die entsprechenden Teile wie Audioverstärker 42, TMC-Decoder 43 und Autotelefoneinheit 44 verteilt. Die Steuerung nimmt dabei der Rechner 11 vor. Die von den verschiedenen Teilen erzeugten Audiosignale (Sprache bzw. Musik) gehen dem Audioverstärker 42 zu, dessen Eingangsquellen umschaltbar sind. Diese Steuerung nimmt ebenfalls der Rechner 11 vor. Wird durch Einschieben bzw. Auswurf einer oder zweier Chipkarten die erste Schaltanordnung 16' und/oder die zweite Schaltanordnung 26 betätigt, so registriert der Rechner 11 diese Zustandsänderung und führt die erforderlichen Maßnahmen wie An- und Abschalten der Versorgungsspannung, Reset-Prozedur und ähnliches aus. Die separate Verdrahtung von Autotelefoneinheit, Audioverstärker usw. mit dem Rechner 11 ermöglicht eine unabhängige Kommunikation des Rechners 11 mit den eingeführten Chipkarten.

## Patentansprüche

1. Kartenleser für Chipkarten, die auf einer Vorderseite (2) Kontakte (4) zum Auslesen und/oder Aufbringen von Karteninformationen aufweisen, mit
- einem Kartenschacht (10) zur Aufnahme von Chipkarten über eine Öffnung,
- einer im Kartenschacht angebrachten ersten Kontaktanordnung (14) zur Kontaktierung der Kontakte (4) einer einbringbaren Chipkarte (23), und
- einer auf die An- und Abwesenheit von Chipkarten im Kartenschacht (10) ansprechenden ersten Schaltungsanordnung (16),
- einer zweiten, der ersten Kontaktanordnung (14) im Kartenschacht (10) gegenüberliegenden und zugewandten Kontaktanordnung (15) zur Kontaktierung einer zweiten in eine Öffnung des Kartenschachtes (10) einbringbaren Chipkarte (23),
**gekennzeichnet durch**
- einen Rechner zur automatischen Ermittlung, mit welcher der Kontaktanordnungen (14 oder 15), eine einzeln eingeführte Chipkarte (23) in elektrischer Verbindung steht

2. Kartenleser nach Anspruch 1, **dadurch gekennzeichnet, daß** wahlweise eine oder zwei Chipkarten in den Kartenschacht (10) einschiebbar sind, wobei beim Einschieben von zwei Chipkarten die beiden Chipkarten mit ihren Rückseiten (7) plan aufeinanderliegen.

3. Kartenleser nach einem der vorhergehenden Ansprüche, **dadurch gekennzeichnet, daß** eine zweite auf die An- oder Abwesenheit einer zweiten Chipkarte im Kartenschacht ansprechenden Schaltanordnung vorgesehen ist sowie ein Mittel, durch das mit dem Einführen der ersten Karte die erste Schaltanordnung, nicht aber die zweite Schaltanordnung betätigbar wird.

4. Kartenleser nach Anspruch 3, **dadurch gekennzeichnet, daß** eine Anpreßplatte vorgesehen ist, die die zuerst eingeführte Chipkarte zur ersten Schaltanordnung führt.

5. Kartenleser nach Anspruch 4, **dadurch gekennzeichnet, daß** die Anpreßplatte mit einer Anpreßfeder versehen ist und die Anpreßplatte an der Öffnung des Kartenschachts drehbar gelagert ist.

6. Kartenleser nach Anspruch 4 oder 5, **dadurch gekennzeichnet, daß** die zweite Kontaktanordnung auf der Anpreßplatte befestigt ist und die einzelnen Kontakte der zweiten Kontaktanordnung einen solchen Hub haben, daß auch bei einer Schräglage der Anpreßplatte im Kartenschacht eine eingelegte Chipkarte kontaktiert wird.

7. Kartenleser nach einem der vorhergehenden Ansprüche, **dadurch gekennzeichnet, daß** ein Auswurfmechanismus für eingeführte Chipkarten vorgesehen ist.

8. Kartenleser nach Anspruch 7, **dadurch gekennzeichnet, daß** ein zweiter Auswurfmechanismus vorgesehen ist, so daß zwei eingeführte Chipkarten einzeln auswerfbar sind.

9. Kartenleser nach einem der vorhergehenden Ansprüche, **dadurch gekennzeichnet, daß** die Schaltanordnungen (16 bzw. 16' und 26) Schaltleitungen (19, 27) und die beiden Kontaktanordnungen Datenverbindungen (17, 18) umfassen, über die die Schaltanordnungen (16 bzw. 16' und 26) bzw. die Kontaktanordnungen (14, 15) mit dem Rechner (11) verbunden sind, so daß eingebrachte Chipkarten über die Datenverbindungen (17, 18) lesbar und/oder beschreibbar sind, wenn die Schaltanordnungen (16 bzw. 16' und/oder 26) die Anwesenheit von Chipkarten signalisieren.

10. Kartenleser nach Anspruch 9, **dadurch gekennzeichnet, daß** nach dem Einschieben einer Chipkarte über die vom Rechner (11) ermittelte Kontaktanordnung (14 bzw. 15), mit der die Kontakte der Chipkarte in Verbindung stehen, ein Datenaustausch zwischen Rechner (11) und Chipkarte erfolgt.

11. Kartenleser nach einem der vorhergehenden Ansprüche, **dadurch gekennzeichnet, daß** er in einem Autoradio (30) integriert ist und daß der Kartenleser zum Lesen von Information für einen TMC-Dekoder (43) und/oder zum Lesen und/oder Schreiben von Information für eine Autotelefoneinheit (44) geeignet ist.

12. Kartenleser nach einem der vorhergehenden Ansprüche, **dadurch gekennzeichnet, daß** Information von der ersten Kontaktanordnung (14) zur zweiten Kontaktanordnung (15) und/oder umgekehrt übertragbar ist.

## Claims

1. Card reader for chip cards, a front side (2) of which bears contacts (4) for reading and/or applying card information, having
- a card slot (10) for receiving chip cards via an opening,
- a first contact arrangement (14), arranged in the card slot, for making contact with the contacts (4) on a chip card (23) which can be inserted, and
- a first circuit arrangement (16) responding to the presence and absence of chip cards in the card slot (10),
- a second contact arrangement (15), opposite and facing the first contact arrangement (14) in the card slot (10), for making contact with a second chip card (23) which can be inserted into an opening to the card slot (10),
**characterized by**
- a computer for automatically ascertaining to which of the contact arrangements (14 or 15) an individually inserted chip card (23) is electrically connected.

2. Card reader according to Claim 1, **characterized in that** either one or two chip cards can be pushed into the card slot (10), and, when two chip cards are pushed in, the rear sides (7) of the two chip cards lie flat against one another.

3. Card reader according to one of the preceding claims, **characterized in that** a second switching arrangement responding to the presence or absence of a second chip card in the card slot is provided and also a means which can actuate the first switching arrangement, but not the second switching arrangement, when the first card is inserted.

4. Card reader according to Claim 3, **characterized in that** a contact plate is provided which guides the first chip card inserted to the first switching arrangement.

5. Card reader according to Claim 4, **characterized in that** the contact plate is provided with a contact spring, and the contact plate is mounted so that it can rotate at the opening to the card slot.

6. Card reader according to Claim 4 or 5, **characterized in that** the second contact arrangement is attached to the contact plate, and the individual contacts of the second contact arrangement have such lift that contact is made with an inserted chip card even when the contact plate is in an inclined position in the card slot.

7. Card reader according to one of the preceding claims, **characterized in that** an eject mechanism is provided for inserted chip cards.

8. Card reader according to Claim 7, **characterized in that** a second eject mechanism is provided, so that two chip cards inserted can be ejected separately.

9. Card reader according to one of the preceding claims, **characterized in that** the switching arrangements (16 or 16' and 26) comprise switching lines (19, 27), and the two contact arrangements comprise data links (17, 18) which connect the switching arrangements (16 or 16' and 26) or the contact arrangements (14, 15) to the computer (11), so that inserted chip cards can be read and/or written to via the data links (17, 18) when the switching arrangements (16 or 16' and/or 26) signal the presence of chip cards.

10. Card reader according to Claim 9, **characterized in that**, when a chip card has been pushed in, a data interchange is made between the computer (11) and the chip card via the contact arrangement (14 or 15) to which the contacts on the chip card are connected, said contact arrangement being ascertained by the computer (11).

11. Card reader according to one of the preceding claims, **characterized in that** it is incorporated in a car radio (30) and **in that** the card reader is suitable for reading information for a TMC decoder (43) and/or for reading and/or writing information for a car telephone unit (44).

12. Card reader according to one of the preceding claims, **characterized in that** information can be transferred from the first contact arrangement (14) to the second contact arrangement (15) and/or vice versa.

## Revendications

1. Lecteur de cartes à puce comportant sur la face avant (2), des contacts (4) pour lire et/ou appliquer des informations de cartes, comprenant :
- un logement à cartes (10) pour recevoir des cartes à puce à travers une ouverture,
- un premier dispositif à contact (14) prévu dans le logement à cartes pour mettre en liaison les contacts (4) d'une carte à puce(23) insérée, et
- un premier circuit (16) répondant à l'absence et à la présence de cartes à puce dans le logement (10),
- un second dispositif de contact (15), en regard du premier dispositif de contact (14) dans le logement à cartes (10), pour établir le contact avec une seconde carte à puce (23) introduite par une ouverture du logement (10),
**caractérisé par**
- un calculateur pour déterminer automatiquement avec lequel des dispositifs de contact (14) ou (15) est reliée électriquement une carte à puce (23) distincte introduite.

2. Lecteur de cartes à puce selon la revendication 1,
**caractérisé en ce qu'**
au choix une ou deux cartes à puce peuvent être glissées dans le logement (10), et
lorsqu'on introduit deux cartes à puce, les deux cartes sont appliquées l'une contre l'autre à plat par leur dos (7).

3. Lecteur de cartes à puce selon l'une des revendications précédentes,
**caractérisé en ce que**
le logement à cartes comporte un circuit répondant à la présence ou à l'absence d'une seconde carte à puce, ainsi qu'un moyen qui, par l'introduction de la première carte, actionne le premier circuit mais non le second circuit.

4. Lecteur de cartes à puce selon la revendication 3,
**caractérisé par**
une plaque de pression qui conduit la première carte à puce introduite vers le premier circuit.

5. Lecteur de cartes à puce selon la revendication 4,
**caractérisé en ce que**
la plaque de pression comporte un ressort de pression et la plaque est montée pivotante au niveau de l'ouverture du logement à cartes.

6. Lecteur de cartes à puce selon la revendication 4 ou 5,
**caractérisé en ce que**
le second dispositif de contact est fixé sur la plaque de pression et les différents contacts du second dispositif de contact ont une course telle que même si la plaque de pression est en position inclinée dans le logement, le contact est réalisé avec la carte à puce introduite.

7. Lecteur de cartes à puce selon l'une des revendications précédentes,
**caractérisé par**
un mécanisme d'éjection pour la carte à puce introduite.

8. Lecteur de cartes à puce selon la revendication 7,
**caractérisé par**
un second mécanisme d'éjection de façon à pouvoir éjecter individuellement les deux cartes à puce introduites.

9. Lecteur de cartes à puce selon l'une des revendications précédentes,
**caractérisé en ce que**
les circuits (16, 16', 26) comportent des lignes de circuit (19, 27) et les deux dispositifs de contact comportent des liaisons de transmission de données (17, 18) qui relient les circuits (16, 16' et 26) ou les dispositifs de contact (14, 15) au calculateur (11) de façon que les cartes à puce mises en place puissent être lues et/ou inscrites par l'intermédiaire des liaisons de transmission de données (17, 18), si les circuits (16, 16' et/ou 26) signalent la présence de cartes à puce.

10. Lecteur de cartes à puce selon la revendication 9,
**caractérisé en ce qu'**
après introduction d'une carte à puce, un échange de données se fait entre le calculateur (11) et la carte à puce par le dispositif de contact (14, 15) déterminé par le calculateur (11), dispositif par lequel le contact s'établit avec la carte à puce.

11. Lecteur de cartes à puce selon l'une des revendications précédentes,
**caractérisé en ce qu'**
il est intégré dans un autoradio (30) et le lecteur de cartes est prévu pour lire des informations pour un décodeur TMC (43) et/ou pour lire et/ou écrire des informations pour une unité de téléphone de voiture (44).

12. Lecteur de cartes à puce selon l'une des revendications précédentes,
**caractérisé en ce que**
l'information est transmise du premier dispositif de contact (14) vers le second dispositif de contact (15) et/ou inversement.
